# EUROPEAN PATENT APPLICATION

(11) **EP 4 803 576 A1**
(43) Date of publication of application: **09.09.2026**
(21) Application number: 24886215.3
(22) Date of filing: 29.10.2024
(51) Int. Cl.: C08L 25/12, C08L 55/02, C08L 51/04, C08L 35/00

(54) **RESIN COMPOSITION**

(30) Priority: 30.10.2023 KR 20230146520
(71) Applicant: LG Chem, Ltd., Seoul 07336 (KR)
(72) Inventor: JUNG, Dae San, Daejeon 34122 (KR); NAM, Jin Oh, Daejeon 34122 (KR); NAMGUNG, Ho, Daejeon 34122 (KR); KIM, Seong Lyong, Daejeon 34122 (KR); HAN, Seung Hun, Daejeon 34122 (KR)
(74) Representative: Vossius & Partner Patentanwälte Rechtsanwälte mbB
(86) International application number: PCT/KR2024/016686
(87) International publication number: WO 2025/095542

(57) **Abstract**

The resin composition according to an embodiment of the present invention may include: a graft copolymer composition comprising a first graft copolymer including a rubber polymer having a glass transition temperature of -120°C or more and -90°C or less and a second graft copolymer including a rubber polymer having a glass transition temperature of -70°C or more and -40°C or less; a matrix copolymer composition comprising any one selected from the group consisting of a first matrix copolymer including an alkyl-substituted aromatic vinyl-based monomer unit, a second matrix copolymer including a maleimide-based monomer unit, and a third matrix copolymer including an alkyl-unsubstituted aromatic vinyl-based monomer unit, or a mixture thereof; an elastomer comprising a polyolefin-based compound; and a third graft copolymer in which an aromatic vinyl-based monomer unit and a vinyl cyan-based monomer unit are grafted onto a polyalkylene main chain.

## Description

### [Technical Field]

### [CROSS-REFERENCE TO RELATED APPLICATION]

This application claims the benefit of priority to Korean Patent Application No. 2023-0146520 filed on October 30, 2023, the disclosure of which is incorporated herein by reference in its entirety.

### [Technical Field]

The present invention relates to a resin composition.

### [Background Art]

Acrylonitrile-butadiene-styrene (ABS) copolymer is produced by graft copolymerizing styrene and acrylonitrile with a butadiene rubber polymer. The ABS copolymer has the advantage of having a balanced combination of rigidity, chemical resistance, impact resistance, and processability, having excellent impact strength and mechanical properties, surface gloss, secondary processing characteristics such as plating, printing, and painting, and being able to produce products in a variety of colors. Accordingly, ABS resins are widely used in the manufacture of automobile interior parts.

However, when vibration during the driving of a car causes ABS resin car interior parts to come into contact with each other, or causes ABS resin car interior parts to come into contact with other members such as polyvinyl chloride, chloroprene rubber, polyurethane, natural rubber, polyester or polyethylene lining sheets, foams, etc. and rub against each other, a squeaking sound (friction noise) may be generated.

Since the quietness inside the car is reduced due to the friction noise, there is a growing need to develop an ABS resin that has less friction noise even when in contact with other members.

### [Prior Art Literature]

### [Patent Documents]

(Patent Document 1) KR10-2015-0068313 A

### [Disclosure]

### [Technical Problem]

An object to be achieved by the present invention is to provide a resin composition having low friction noise even at high temperatures and excellent heat resistance and mechanical properties.

### [Technical Solution]

(1) The present invention provides a resin composition including: a graft copolymer composition comprising a first graft copolymer including a rubber polymer having a glass transition temperature of -120°C or more and -90°C or less and a second graft copolymer including a rubber polymer having a glass transition temperature of -70°C or more and -40°C or less; a matrix copolymer composition comprising any one selected from the group consisting of a first matrix copolymer including an alkyl-substituted aromatic vinyl-based monomer unit, a second matrix copolymer including a maleimide-based monomer unit, and a third matrix copolymer including an alkyl-unsubstituted aromatic vinyl-based monomer unit, or a mixture thereof; an elastomer comprising a polyolefin-based compound; and a third graft copolymer in which an aromatic vinyl-based monomer unit and a vinyl cyan-based monomer unit are grafted onto a polyalkylene main chain.
(2) The present invention provides the resin composition according to (1) above, wherein the rubber polymer included in the first graft copolymer comprises a conjugated diene-based monomer unit, and the rubber polymer included in the second graft copolymer comprises an acrylic monomer unit.
(3) The present invention provides the resin composition according to (1) or (2) above, wherein the first matrix copolymer comprises an alkyl-substituted aromatic vinyl-based monomer unit and a vinyl cyan-based monomer unit.
(4) The present invention provides the resin composition according to any one of (1) to (3) above, wherein the second matrix copolymer comprises a maleimide-based monomer unit, an aromatic vinyl-based monomer unit, and a maleic anhydride monomer unit.
(5) The present invention provides the resin composition according to any one of (1) to (4) above, wherein the third matrix copolymer comprises an alkyl-unsubstituted aromatic vinyl-based monomer unit and a vinyl cyan-based monomer unit.
(6) The present invention provides the resin composition according to any one of (1) to (5) above, wherein the second graft copolymer is included in an amount of 4 parts by weight or more and 11 parts by weight or less based on 100 parts by weight of the total of the graft copolymer composition and the matrix copolymer composition.
(7) The present invention provides the resin composition according to any one of (1) to (6) above, wherein the first graft copolymer is included in an amount of 10 parts by weight or more and 30 parts by weight or less based on 100 parts by weight of the total of the graft copolymer composition and the matrix copolymer composition.
(8) The present invention provides the resin composition according to any one of (1) to (7) above, wherein the elastomer is included in an amount of 1 parts by weight or more and 5 parts by weight or less based on 100 parts by weight of the total of the graft copolymer composition and the matrix copolymer composition.
(9) The present invention provides the resin composition according to any one of (1) to (8) above, wherein the third graft copolymer is included in an amount of 1 parts by weight or more and 5 parts by weight or less based on 100 parts by weight of the total of the graft copolymer and the matrix copolymer.
(10) The present invention provides the resin composition according to any one of (1) to (9) above, wherein the matrix copolymer composition comprises the second matrix copolymer and the third matrix copolymer, wherein the second matrix copolymer is included in an amount of 5 parts by weight or more and 25 parts by weight or less based on 100 parts by weight of the total of the graft copolymer composition and the matrix copolymer composition, and the third matrix copolymer is included in an amount of 50 parts by weight or more and 70 parts by weight or less based on 100 parts by weight of the total of the graft copolymer composition and the matrix copolymer composition.
(11) The present invention provides the resin composition according to any one of (1) to (10) above, wherein an RPN grade measured under the conditions of 75°C, relative humidity of 50%, speed of 1 mm/s, and normal force of 10 N according to VDA 230-206 is 3 or less.

### [Advantageous Effects]

The resin composition according to the present invention has low friction noise even at high temperatures, and has excellent heat resistance and mechanical properties.

### [Best Modes of the Invention]

Hereinafter, the present invention will be described in more detail to help understand the present invention.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

In the present invention, the term 'monomer unit' may refer to a component, structure, or substance itself derived from a monomer, and as a specific example, may mean a repeating unit in a polymer formed by a monomer introduced during polymerization of the polymer and participating in the polymerization reaction.

The term 'composition' used in the present invention includes reaction products and decomposition products formed from materials of the composition as well as a mixture of the materials comprising the composition.

In the present invention, the average particle diameter of the graft copolymer can be measured using a dynamic light scattering method, and as a specific example, can be measured using a Nicomp 380 HPL equipment (product name, manufactured by Nicomp). In this specification, the average particle diameter means the arithmetic average particle diameter in the particle size distribution measured by the dynamic light scattering method, that is, the scattering intensity average particle diameter.

In the present invention, the weight average molecular weight of each component forming the resin composition can be measured as a relative value with respect to a standard polystyrene, which is a standard sample, by gel permeation chromatography using tetrahydrofuran as an eluent.

### <Resin composition>

The present invention provides a resin composition.

The resin composition according to an embodiment of the present invention includes: a graft copolymer composition comprising a first graft copolymer including a rubber polymer having a glass transition temperature of -120°C or more and -90°C or less and a second graft copolymer including a rubber polymer having a glass transition temperature of -70°C or more and -40°C or less; a matrix copolymer composition comprising any one selected from the group consisting of a first matrix copolymer including an alkyl-substituted aromatic vinyl-based monomer unit, a second matrix copolymer including a maleimide-based monomer unit, and a third matrix copolymer including an alkyl-unsubstituted aromatic vinyl-based monomer unit, or a mixture thereof; an elastomer comprising a polyolefin-based compound; and a third graft copolymer in which an aromatic vinyl-based monomer unit and a vinyl cyan-based monomer unit are grafted onto a polyalkylene main chain.

The present inventors have found that when a resin composition includes a first graft copolymer comprising a rubber polymer having a glass transition temperature of -120°C or more and -90°C or less and a second graft copolymer comprising a rubber polymer having a glass transition temperature of -70°C or more and -40°C or less, the resin composition has low friction noise even at high temperatures and excellent heat resistance and mechanical properties, thereby completing the present invention.

Specifically, the resin composition according to one embodiment of the present invention has an RPN grade of 3 or less as measured under the conditions of 75°C, relative humidity of 50%, speed of 1 mm/s, and normal force of 10 N using a Ziegler stick-slip tester (SSP-04) according to VDA 230-206, indicating that the possibility of friction noise generation at high temperatures is significantly low.

Hereinafter, each component of the resin composition according to one embodiment of the present invention will be described.

### 1. Graft copolymer composition

According to one embodiment of the present invention, the graft copolymer composition may include a first graft copolymer comprising a rubber polymer having a glass transition temperature of -120°C or more and -90°C or less and a second graft copolymer comprising a rubber polymer having a glass transition temperature of -70°C or more and -40°C or less.

According to one embodiment of the present invention, the resin composition simultaneously includes a first graft copolymer comprising a rubber polymer having a glass transition temperature of -120°C or more and -90°C or less and a second graft copolymer comprising a rubber polymer having a glass transition temperature of -70°C or more and -40°C or less, thereby improving the stick-slip phenomenon, and enabling the resin composition to generate less frictional noise even at high temperatures.

### (1) First graft copolymer

According to one embodiment of the present invention, the first graft copolymer is a component that improves the impact resistance of the resin composition, and may be a graft polymer including a conjugated diene-based polymer including a conjugated diene-based monomer unit as a rubber polymer and a shell including an aromatic vinyl-based monomer unit and a vinyl cyan-based monomer unit grafted to the conjugated diene-based polymer. The shell may include an aromatic vinyl-based monomer unit and a vinyl cyan-based monomer unit that are not grafted to the conjugated diene-based polymer.

According to one embodiment of the present invention, a conjugated diene-based monomer for forming the conjugated diene-based monomer unit included in the first graft copolymer may be at least one selected from the group consisting of 1,3-butadiene, isoprene, chloroprene, and piperylene, and as a specific example, may be 1,3-butadiene.

According to one embodiment of the present invention, an aromatic vinyl-based monomer for forming the aromatic vinyl-based monomer unit included in the first graft copolymer may be at least one selected from the group consisting of α-methyl styrene, α-ethyl styrene, p-methyl styrene, 2,4-dimethyl styrene, styrene, p-fluoro styrene, p-chloro styrene, and p-bromostyrene, and as a specific example, may be styrene.

According to one embodiment of the present invention, a vinyl cyan-based monomer for forming the vinyl cyan-based monomer unit included in the first graft copolymer may be at least one selected from the group consisting of acrylonitrile, methacrylonitrile, (Z)-3-phenyl acrylonitrile, and α-chloro acrylonitrile, and as a specific example, may be acrylonitrile.

According to one embodiment of the present invention, the content of the conjugated diene polymer included in the first graft copolymer may be 40 to 80 wt%, preferably 50 to 70 wt%, based on the total weight of the first graft copolymer. When the above condition is satisfied, the impact resistance of the graft polymer composition can be further improved.

According to one embodiment of the present invention, the content of the aromatic vinyl-based monomer unit included in the first graft copolymer may be 10 to 50 wt%, preferably 20 to 40 wt%, based on the total weight of the first graft copolymer. When the above condition is satisfied, the processability of the graft copolymer can be further improved.

According to one embodiment of the present invention, the content of the vinyl cyan-based monomer unit included in the first graft copolymer may be 1 to 30 wt%, preferably 5 to 25 wt%, based on the total weight of the first graft copolymer. When the above condition is satisfied, the chemical resistance of the graft polymer composition can be further improved.

According to one embodiment of the present invention, the glass transition temperature of the rubber polymer included in the first graft copolymer may be -120°C or more and -90°C or less, and for specific examples, -118°C or more, - 116°C or more, -114°C or more, -112°C or more, -110°C or more, -108°C or more, -106°C or more, or -104°C or more, and -91°C or less, -92°C or less, - 93°C or less, -94°C or less, -95°C or less, -96°C or less, -97°C or less, -98°C or less, or -99°C or less. The glass transition temperature of the rubber polymer included in the first graft copolymer may be measured using a differential scanning calorimeter with a solid obtained by coagulating with sulfuric acid, MgSO₄, CaCl₂, or Al₂(SO₄)₃, or the like, which are coagulants well known as a rubber polymer latex.

According to one embodiment of the present invention, the resin composition may include the first graft copolymer in an amount of 10 parts by weight or more and 30 parts by weight or less, based on 100 parts by weight of the total of the graft copolymer composition and the matrix copolymer composition, and for specific examples, may include 11 parts by weight or more, 12 parts by weight or more, 13 parts by weight or more, 14 parts by weight or more, or 15 parts by weight or more, and 28 parts by weight or less, 26 parts by weight or less, 24 parts by weight or less, 22 parts by weight or less, or 20 parts by weight or less. When the above range is satisfied, the impact strength and flow index of the resin composition can be improved.

### (2) Second graft copolymer

According to one embodiment of the present invention, the first graft copolymer is a component that improves the impact resistance of the resin composition, and may be a graft polymer including an acrylic polymer including an acrylic monomer unit as a rubber polymer and a shell including an aromatic vinyl-based monomer unit and a vinyl cyan-based monomer unit grafted to the acrylic polymer. The shell may include an aromatic vinyl-based monomer unit and a vinyl cyan-based monomer unit that are not grafted to the acrylic polymer.

According to one embodiment of the present invention, an acrylic monomer for forming the acrylic monomer unit included in the second graft copolymer may be a C₄ to C₁₀ alkyl (meth)acrylate monomer, and as a specific example, may be at least one selected from the group consisting of butyl (meth)acrylate, pentyl (meth)acrylate, hexyl (meth)acrylate, heptyl (meth)acrylate, octyl (meth)acrylate, ethylhexyl (meth)acrylate, nonyl (meth)acrylate, isononyl (meth)acrylate, and decyl (meth)acrylate, and as a more specific example, may be butyl acrylate.

According to one embodiment of the present invention, an aromatic vinyl-based monomer for forming the aromatic vinyl-based monomer unit included in the second graft copolymer may be at least one selected from the group consisting of α-methyl styrene, α-ethyl styrene, p-methyl styrene, 2,4-dimethyl styrene, styrene, p-fluoro styrene, p-chloro styrene, and p-bromostyrene, and as a specific example, may be styrene.

According to one embodiment of the present invention, a vinyl cyan-based monomer for forming the vinyl cyan-based monomer unit included in the second graft copolymer may be at least one selected from the group consisting of acrylonitrile, methacrylonitrile, (Z)-3-phenyl acrylonitrile, and α-chloro acrylonitrile, and as a specific example, may be acrylonitrile.

According to one embodiment of the present invention, the acrylic monomer may be introduced in an amount of 30 wt% or more and 70 wt% or less, or 35 wt% or more and 65 wt% or less, based on the total weight of monomers introduced during the production of the second graft copolymer, and more specifically, may be introduced in an amount of 40 wt% or more and 60 wt% or less. When the above range is satisfied, the weather resistance, impact resistance, surface gloss characteristics, elongation, and whitening characteristics of the second graft copolymer can be further improved.

According to one embodiment of the present invention, the aromatic vinyl-based monomer may be introduced in an amount of 20 wt% or more and 50 wt% or less, or 25 wt% or more and 45 wt% or less, based on the total weight of monomers introduced during the production of the second graft copolymer, and more specifically, may be introduced in an amount of 30 wt% or more and 40 wt% or less. When the above range is satisfied, not only can the processability of the second graft copolymer be further improved, but also the second graft copolymer can be more uniformly dispersed in the resin composition, and the colorability of the resin composition can be further improved.

According to one embodiment of the present invention, the vinyl cyan-based monomer may be introduced in an amount of 5 wt% or more and 25 wt% or less, or 7 wt% or more and 22 wt% or less, based on the total weight of monomers introduced during the production of the second graft copolymer, and more specifically, may be introduced in an amount of 10 wt% or more and 20 wt% or less. When the above range is satisfied, not only can the chemical resistance of the second graft copolymer be further improved, but also the second graft copolymer can be more uniformly dispersed in the resin composition, and the colorability of the resin composition can be further improved.

According to one embodiment of the present invention, the glass transition temperature of the rubber polymer included in the second graft copolymer may be -70°C or more and -40°C or less, and for specific examples, -68°C or more, -66°C or more, -64°C or more, -62°C or more, -60°C or more, -58°C or more, - 56°C or more, -54°C or more, or -52°C or more, and -41°C or less, -42°C or less, -43°C or less, -44°C or less, -45°C or less, -46°C or less, -47°C or less, -48°C or less, or -49°C or less. The glass transition temperature of the rubber polymer included in the second graft copolymer may be measured using a differential scanning calorimeter with a solid obtained by coagulating with sulfuric acid, MgSO₄, CaCl₂, or Al₂(SO₄)₃, or the like, which are coagulants well known as a rubber polymer latex.

According to one embodiment of the present invention, the resin composition may include the second graft copolymer in an amount of 4 parts by weight or more and 11 parts by weight or less, based on 100 parts by weight of the total of the graft copolymer composition and the matrix copolymer composition, and for specific examples, may include 4.2 parts by weight or more, 4.4 parts by weight or more, 4.6 parts by weight or more, 4.8 parts by weight or more, or 5 parts by weight or more, and 10.8 parts by weight or less, 10.6 parts by weight or less, 10.4 parts by weight or less, 10.2 parts by weight or less, or 10 parts by weight or less. When the above range is satisfied, the impact strength and weather resistance of the resin composition can be improved.

### 2. Matrix copolymer composition

According to an embodiment of the present invention, the matrix copolymer composition may include any one selected from the group consisting of a first matrix copolymer including an alkyl-substituted aromatic vinyl-based monomer unit, a second matrix copolymer including a maleimide-based monomer unit, and a third matrix copolymer including an alkyl-unsubstituted aromatic vinyl-based monomer unit, or a mixture thereof.

As a specific example, the matrix copolymer composition according to one embodiment of the present invention may include any one of the first matrix copolymer, the second matrix copolymer, or the third matrix copolymer, or may include a mixture of two selected from the group consisting of the first matrix copolymer, the second matrix copolymer, or the third matrix copolymer, or may include the first matrix copolymer, the second matrix copolymer, and the third matrix copolymer.

When the matrix copolymer composition according to one embodiment of the present invention includes the second matrix copolymer and the third matrix copolymer, the friction noise properties of the resin composition can be further improved.

Hereinafter, each of the first matrix copolymer, the second matrix copolymer, and the third matrix copolymer forming the matrix copolymer composition will be described.

### (1) First matrix copolymer

According to one embodiment of the present invention, the first matrix copolymer is a component that improves the heat resistance of the resin composition, is a non-grafted copolymer, and may include an alkyl-substituted aromatic vinyl-based monomer unit and a vinyl cyan-based monomer unit.

According to one embodiment of the present invention, an alkyl-substituted aromatic vinyl monomer for forming the alkyl-substituted aromatic vinyl monomer unit included in the first matrix copolymer may be at least one selected from the group consisting of α-methyl styrene, p-methyl styrene, and 2,4-dimethyl styrene, and as a specific example, may be α-methyl styrene.

According to one embodiment of the present invention, a vinyl cyan-based monomer for forming the vinyl cyan-based monomer unit included in the first matrix copolymer may be at least one selected from the group consisting of acrylonitrile, methacrylonitrile, (Z)-3-phenyl acrylonitrile, and α-chloro acrylonitrile, and as a specific example, may be acrylonitrile.

According to one embodiment of the present invention, the content of the alkyl-substituted aromatic vinyl-based monomer unit included in the first matrix copolymer may be 60 to 90 wt%, preferably 65 to 85 wt%, based on the total weight of the first matrix copolymer.

In addition, according to one embodiment of the present invention, the content of the vinyl cyan-based monomer unit included in the first matrix copolymer may be 10 to 40 wt%, preferably 15 to 35 wt%, based on the total weight of the first matrix copolymer.

When the above-described conditions are satisfied, it is possible to prevent the first matrix copolymer from being phase-separated from the resin composition.

According to one embodiment of the present invention, the first matrix copolymer may further include an alkyl-unsubstituted aromatic vinyl-based monomer unit in order to implement excellent moldability. The alkyl-unsubstituted aromatic vinyl-based monomer for forming the alkyl-unsubstituted aromatic vinyl-based monomer unit may be at least one selected from the group consisting of styrene, 4-fluorostyrene, 4-chlorostyrene, 2-chlorostyrene, 4-bromostyrene, and 2-bromostyrene, and as a specific example, may be styrene.

In this case, the content of the alkyl-unsubstituted aromatic vinyl-based monomer unit included in the first matrix copolymer may be 15 wt% or less, preferably 10 wt% or less, based on the total weight of the first matrix copolymer.

According to one embodiment of the present invention, when the resin composition includes the first matrix copolymer, the first matrix copolymer may be included in an amount of 15 parts by weight or more and 85 parts by weight or less, and for specific examples, 17 parts by weight or more, 19 parts by weight or more, 21 parts by weight or more, 23 parts by weight or more, or 25 parts by weight or more, and 83 parts by weight or less, 81 parts by weight or less, 79 parts by weight or less, 77 parts by weight or less, or 75 parts by weight or less, based on 100 parts by weight of the total of the graft copolymer composition and the matrix copolymer composition. When the above range is satisfied, the heat resistance of the resin composition can be improved.

### (2) Second matrix copolymer

According to one embodiment of the present invention, the second matrix copolymer is a component that improves the heat resistance and processability of the resin composition, is a non-grafted copolymer, and may include a maleimide-based monomer unit, an aromatic vinyl-based monomer unit, and a maleic acid-based monomer unit.

According to one embodiment of the present invention, a maleimide-based monomer for forming the maleimide-based monomer unit included in the second matrix copolymer may be at least one selected from the group consisting of maleimide, N-methyl maleimide, N-ethyl maleimide, N-propyl maleimide, N-isopropyl maleimide, N-butyl maleimide, N-isobutyl maleimide, N-t-butyl maleimide, N-lauryl maleimide, N-cyclohexyl maleimide, N-phenyl maleimide, N-(4-chlorophenyl) maleimide, 2-methyl-N-phenyl maleimide, N-(4-bromophenyl) maleimide, N-(4-nitrophenyl) maleimide, N-(4-hydroxyphenyl) maleimide, N-(4-methoxyphenyl) maleimide, N-(4-carboxyphenyl) maleimide, and N-benzyl maleimide, and as a specific example, may be N-phenyl maleimide.

According to one embodiment of the present invention, an aromatic vinyl-based monomer for forming the aromatic vinyl-based monomer unit included in the second matrix copolymer may be at least one selected from the group consisting of α-methyl styrene, α-ethyl styrene, p-methyl styrene, 2,4-dimethyl styrene, styrene, p-fluoro styrene, p-chloro styrene, and p-bromostyrene, and as a specific example, may be styrene.

According to one embodiment of the present invention, a maleic acid-based monomer for forming the maleic acid-based monomer unit included in the second matrix copolymer may be at least one selected from the group consisting of maleic anhydride, maleic acid, maleic monoester, and maleic diester, and as a specific example, may be maleic anhydride.

According to one embodiment of the present invention, the content of the maleimide-based monomer-derived unit included in the second matrix copolymer may be 35 to 65 wt%, 40 to 60 wt%, or 45 to 55 wt% based on the total weight of the second matrix copolymer, and preferably 45 to 55 wt%. When the above range is satisfied, the heat resistance of the resin composition can be further improved.

According to one embodiment of the present invention, the aromatic vinyl-based monomer-derived unit may be included in an amount of 30 to 60 wt%, 35 to 55 wt%, or 40 to 50 wt% based on the total weight of the second matrix copolymer, and preferably 40 to 50 wt%. When the above range is satisfied, the resin composition has the advantage of excellent mechanical properties and property balance.

According to one embodiment of the present invention, the maleic acid-based monomer-derived unit may be included in an amount of 0.1 to 10 wt%, 0.5 to 7 wt%, or 1 to 5 wt%, and preferably 1 to 5 wt%, based on the total weight of the second matrix copolymer. When the above range is satisfied, the resin composition has the advantage of excellent mechanical properties and property balance.

According to one embodiment of the present invention, when the resin composition includes the second matrix copolymer, the second matrix copolymer may be included in an amount of 5 parts by weight or more and 50 parts by weight or less, and for specific examples, 6 parts by weight or more, 7 parts by weight or more, 8 parts by weight or more, 9 parts by weight or more, or 10 parts by weight or more, and 48 parts by weight or less, 46 parts by weight or less, 44 parts by weight or less, 42 parts by weight or less, 40 parts by weight or less, 38 parts by weight or less, 36 parts by weight or less, 34 parts by weight or less, 32 parts by weight or less, 30 parts by weight or less, 28 parts by weight or less, 26 parts by weight or less, 25 parts by weight or less, 22 parts by weight or less, or 20 parts by weight or less, based on 100 parts by weight of the total of the graft copolymer composition and the matrix copolymer composition. When the above range is satisfied, the impact strength, heat resistance and flowy index of the resin composition can be improved, and the friction noise properties of the resin composition can be enhanced.

### (3) Third matrix copolymer

According to one embodiment of the present invention, the third matrix copolymer is a component that improves the tensile strength and processability of the resin composition, is a non-grafted copolymer, and may include an alkyl-unsubstituted aromatic vinyl-based monomer unit and a vinyl cyan-based monomer unit.

According to one embodiment of the present invention, the alkyl-unsubstituted aromatic vinyl-based monomer for forming the alkyl-unsubstituted aromatic vinyl-based monomer unit included in the third matrix copolymer may be at least one selected from the group consisting of styrene, 4-fluorostyrene, 4-chlorostyrene, 2-chlorostyrene, 4-bromostyrene, and 2-bromostyrene, and as a specific example, may be styrene.

According to one embodiment of the present invention, a vinyl cyan-based monomer for forming the vinyl cyan-based monomer unit included in the third matrix copolymer may be at least one selected from the group consisting of acrylonitrile, methacrylonitrile, (Z)-3-phenyl acrylonitrile, and α-chloro acrylonitrile, and as a specific example, may be acrylonitrile.

According to one embodiment of the present invention, the content of the alkyl-unsubstituted aromatic vinyl-based monomer unit included in the third matrix copolymer may be 60 to 90 wt%, preferably 65 to 85 wt%, based on the total weight of the third matrix copolymer. When the above-described conditions are satisfied, the processability of the resin composition can be further improved.

According to one embodiment of the present invention, the content of the vinyl cyan-based monomer unit included in the third matrix copolymer may be 10 to 40 wt%, preferably 15 to 35 wt%, based on the total weight of the third matrix copolymer. When the above-described conditions are satisfied, the chemical resistance of the resin composition can be further improved.

According to one embodiment of the present invention, when the resin composition includes the second matrix copolymer, the third matrix copolymer may be included in an amount of 15 parts by weight or more and 75 parts by weight or less, and for specific examples, 20 parts by weight or more, 25 parts by weight or more, 30 parts by weight or more, 35 parts by weight or more, 40 parts by weight or more, 45 parts by weight or more, or 50 parts by weight or more, and 73 parts by weight or less, 70 parts by weight or less, 69 parts by weight or less, 67 parts by weight or less, or 65 parts by weight or less, based on 100 parts by weight of the total of the graft copolymer composition and the matrix copolymer composition. When the above range is satisfied, the impact strength and flowy index of the resin composition can be improved, and the friction noise properties of the resin composition can be enhanced.

According to one embodiment of the present invention, the matrix copolymer composition may include the second matrix copolymer and the third matrix copolymer, and in this case, the second matrix copolymer and the third matrix copolymer may be included within the above-described ranges, respectively, based on 100 parts by weight of the total of the graft copolymer composition and the matrix copolymer composition. As a specific example, when the matrix copolymer composition includes the second matrix copolymer and the third matrix copolymer, the second matrix copolymer may be included in an amount of 5 parts by weight or more and 25 parts by weight or less, and the third matrix copolymer may be included in an amount of 50 parts by weight or more and 70 parts by weight or less, based on 100 parts by weight of the total of the graft copolymer composition and the matrix copolymer composition. In this case, the friction noise properties of the resin composition can be further enhanced.

### 3. Elastomer

According to one embodiment of the present invention, the elastomer is a component for imparting friction noise resistance to the resin composition, and may include a polyolefin-based compound.

According to one embodiment of the present invention, the polyolefin-based compound included in the elastomer may be a copolymer of ethylene and an alpha-olefin having 3 to 8 carbon atoms, and more specifically, may be a copolymer of ethylene and 1-butene.

According to one embodiment of the present invention, the resin composition may include the elastomer in an amount of 1 parts by weight or more and 5 parts by weight or less, based on 100 parts by weight of the total of the graft copolymer composition and the matrix copolymer composition, and for specific examples, may include 1.1 parts by weight or more, 1.2 parts by weight or more, 1.3 parts by weight or more, 1.4 parts by weight or more, or 1.5 parts by weight or more, and 4.8 parts by weight or less, 4.6 parts by weight or less, 4.4 parts by weight or less, 4.2 parts by weight or less, or 4 parts by weight or less. Within the above range, there is an effect of improving the friction noise properties of the resin composition while preventing peeling of the resin composition.

### 4. Third graft copolymer

According to one embodiment of the present invention, the third graft copolymer is a component that serves to improve compatibility for the entire components of the resin composition, and may be a copolymer in which an aromatic vinyl-based monomer unit and a vinyl cyan-based monomer unit are grafted to a polyalkylene main chain. Meanwhile, the third graft copolymer may also be referred to as a compatibilizer in the present specification.

According to one embodiment of the present invention, the third graft copolymer may be a copolymer in which a vinyl cyan-based monomer unit and an aromatic vinyl-based monomer unit are graft-polymerized to polyolefin, and as a more specific example, a polyethylene-based acrylonitrile-styrene copolymer in which an acrylonitrile unit and a styrene unit are graft-polymerized to polyethylene. In this case, the polyethylene-based acrylonitrile-styrene copolymer may include 30 wt% to 70 wt% of polyethylene; 30 wt% to 70 wt% of an acrylonitrile unit and a styrene unit.

According to one embodiment of the present invention, the resin composition may include the third graft copolymer in an amount of 1 parts by weight or more and 5 parts by weight or less, based on 100 parts by weight of the total of the graft copolymer composition and the matrix copolymer composition, and for specific examples, may include 1.1 parts by weight or more, 1.2 parts by weight or more, 1.3 parts by weight or more, 1.4 parts by weight or more, or 1.5 parts by weight or more, and 4.8 parts by weight or less, 4.6 parts by weight or less, 4.4 parts by weight or less, 4.2 parts by weight or less, or 4 parts by weight or less. Within the above range, there is an effect of improving compatibility for all components of the resin composition, thereby preventing peeling of the resin composition.

### 5. Other additives

According to one embodiment of the present invention, the resin composition may further include other additives. The additives may be at least one selected from the group consisting of a lubricant, an antioxidant, a pigment, a light stabilizer, a hydrolysis stabilizer, a release agent, an antistatic agent, a conductivity imparting agent, an electromagnetic wave shielding agent, a magnetism imparting agent, a mineral filler, a crosslinking agent, an antibacterial agent, a processing aid, a metal deactivator, a suppressor, an antifriction and anti-wear agent, and a coupling agent.

Any additive may be used without limitation as long as it is used in the technical field of the present invention, and a person skilled in the art may select an additive included in the present invention according to the purpose.

### <Molded article>

The present invention provides a molded article molded from the resin composition.

According to one embodiment of the present invention, the molded article may be extruded and injection-molded from the resin composition, and may be applied to a product group that requires mechanical properties, heat resistance, and friction noise resistance at the same time, and as a specific example, may be an automobile interior material.

Hereinafter, examples of the present invention will be described in detail so that those skilled in the art can easily implement the present invention. However, the present invention may be embodied in a variety of forms and is not limited to the examples described herein.

### Examples and Comparative Examples

The materials used in the examples and comparative examples are as follows:
**(1) Graft copolymer (A1):** An emulsion-polymerized ABS graft copolymer (manufactured by LG Chemical; product name: DP270E) containing 60 wt% of a butadiene polymer having a Tg of -104°C and an average particle diameter of 300 nm, 10 wt% of acrylonitrile, and 30 wt% of styrene was used.
**(2) Graft copolymer (A2):** An ASA graft copolymer (manufactured by LG Chemical; product name: SA927) containing 50 wt% of a butyl acrylate polymer having a Tg of -53°C and an average particle diameter of 450 nm, 14 wt% of acrylonitrile, and 36 wt% of styrene was used.
**(3) Graft copolymer** (A3): A graft copolymer containing 60 wt% of a styrenebutadiene (styrene 25 wt%, butadiene 75 wt%) rubber polymer having a Tg of - 29°C, 10 wt% of acrylonitrile, and 30 wt% of styrene was used.
**(4) Graft copolymer** (A4): A bulk-polymerized ABS graft copolymer (manufactured by LG Chemical; product name: ER400) containing 11 wt% of a butadiene polymer having a Tg of -104°C and an average particle diameter of 1000 nm, 18 wt% of acrylonitrile, and 71 wt% of styrene was used.
**(5) Matrix copolymer (B1):** A heat-resistant resin containing 65 wt% of alpha-methylstyrene, 28 wt% of acrylonitrile, and 7 wt% of styrene (manufactured by LG Chemical; product name: 99UH) was used.
**(6) Matrix copolymer (B2):** A PMI-based heat-resistant resin containing 52 wt% of N-phenylmaleimide (PMI), 46 wt% of styrene, and 2 wt% of maleic anhydride (MAH) (manufactured by DENKA; product name: MSNB) was used.
**(7) Matrix copolymer (B3):** A SAN resin containing 27 wt% of acrylonitrile and 76 wt% of styrene (manufactured by LG Chemical; product name: 80HF) was used.
**(8) Elastomer (C):** An elastomer containing a polyolefin-based compound (manufactured by LG Chemical; product name: LC565) was used.
**(9) Compatibilizer (D):** A graft copolymer (manufactured by NOF; product name: MODIPER A1401) in which an aromatic vinyl-based monomer unit and a vinyl cyan-based monomer unit are grafted to a polyalkylene main chain was used.

A resin composition was prepared by mixing the graft copolymer, matrix copolymer, elastomer, and compatibilizer in the amounts described in Tables 1 to 3 below. A pellet-type resin composition was prepared by using a twin-screw extrusion kneader together with a lubricant and a stabilizer at a cylinder temperature of 220°C.

### Experimental Example

The resin compositions prepared in the above examples and comparative examples were extruded by a twin-screw extruder at a cylinder temperature of 240°C together with a lubricant and a stabilizer to manufacture pellets, and then the specimens were injected at 240°C. The impact strength, tensile strength, heat distortion temperature, friction noise resistance at room temperature, and friction noise resistance at high temperature were measured by the following methods, and were shown in Tables 1 to 3 below.

* Notched Izod Impact Strength (J/m): The notched Izod impact strength was measured for a specimen with a thickness of 1/4 inch at 23°C according to ASTM D256.
* Tensile Strength (MPa): The tensile strength was measured under the condition of a tensile speed of 50 mm/min according to ASTM D638.
* Heat Deflection Temperature (°C): The heat deflection temperature was measured under the conditions of 18.6 kgf load and 120°C/hour according to ASTM D648.
* Room-temperature friction noise resistance (Risk Priority Number): The friction noise resistance was measured for a pair of identically prepared specimens using a Ziegler stick-slip tester (SSP-04) under the conditions of 23°C, relative humidity of 50%, speed of 1 mm/s, and normal force of 10 N according to VDA 230-206, and expressed as a room-temperature RPN grade.
* High-temperature friction noise resistance (Risk Priority Number): The friction noise resistance was measured for a pair of identically prepared specimens using a Ziegler stick-slip tester (SSP-04) under the conditions of 75°C, relative humidity of 50%, speed of 1 mm/s, and normal force of 10 N according to VDA 230-206, and expressed as a high-temperature RPN grade.

**[Table 1]**

| | | Example | | | | | | |
|---|---|---|---|---|---|---|---|---|
| | | 1 | 2 | 3 | 4 | 5 | 6 | 7 |
| Graft copolymer composition | (A1) (parts by weight) | 15 | 15 | 20 | 15 | 15 | 15 | 15 |
| | (A2) (parts by weight) | 10 | 10 | 5 | 10 | 10 | 10 | 10 |
| Matrix copolymer composition | (B1) (parts by weight) | 50 | - | 75 | 75 | - | 30 | - |
| | (B2) (parts by weight) | - | 10 | - | - | 20 | 20 | 30 |
| | (B3) (parts by weight) | 25 | 65 | - | - | 55 | 25 | 45 |
| (C) Elastomer (parts by weight) | | 2.5 | 2.5 | 2.5 | 2.5 | 2.5 | 2.5 | 2.5 |
| (D) Compatibilizer (parts by weight) | | 2 | 2 | 2 | 2 | 2 | 2 | 2 |
| Impact strength (J/m) | | 160 | 140 | 140 | 100 | 90 | 90 | 80 |
| Tensile Strength (MPa) | | 49 | 48 | 50 | 51 | 51 | 46 | 45 |
| Heat deflection temperature (°C) | | 97 | 97 | 102 | 102 | 102 | 106 | 106 |
| RPN, room temperature (@ 23°C) | | 3 | 3 | 3 | 3 | 3 | 3 | 3 |
| RPN, high temperature (@ 75°C) | | 3 | 2 | 3 | 3 | 2 | 3 | 3 |

**[Table 2]**

| | | Comparative Example | | | | |
|---|---|---|---|---|---|---|
| | | 1 | 2 | 3 | 4 | 5 |
| Graft copolymer composition | (A1) (parts by weight) | 25 | 25 | 25 | 25 | 20 |
| | (A3) (parts by weight) | - | - | - | - | 5 |
| Matrix copolymer composition | (B1) (parts by weight) | 50 | - | 75 | 75 | 75 |
| | (B2) (parts by weight) | - | 10 | - | - | - |
| | (B3) (parts by weight) | 25 | 65 | - | - | - |
| (C) Elastomer (parts by | | 2.5 | 2.5 | - | 2.5 | 2.5 |
| weight) | | | | | | |
| (D) Compatibilizer (parts by weight) | | 2 | 2 | - | 2 | 2 |
| Impact strength (J/m) | | 220 | 200 | 170 | 180 | 110 |
| Tensile Strength (MPa) | | 47 | 46 | 51 | 49 | 50 |
| Heat deflection temperature (°C) | | 97 | 97 | 102 | 102 | 102 |
| RPN, room temperature (@ 23°C) | | 3 | 3 | 5 | 3 | 3 |
| RPN, high temperature (@ 75°C) | | 5 | 5 | 7 | 5 | 6 |

**[Table 3]**

| | | Comparative Example | | | | |
|---|---|---|---|---|---|---|
| | | 6 | 7 | 8 | 9 | 10 |
| Graft copolymer composition | (A1) (parts by weight) | 15 | 25 | 25 | 25 | 10 |
| | (A3) (parts by weight) | 10 | - | - | - | - |
| | (A4) (parts by weight) | - | - | - | - | 60 |
| Matrix copolymer composition | (B1) (parts by weight) | 75 | - | 30 | - | - |
| | (B2) (parts by weight) | - | 20 | 20 | 30 | 20 |
| | (B3) (parts by weight) | - | 55 | 25 | 45 | 10 |
| (C) Elastomer (parts by weight) | | 2.5 | 2.5 | 2.5 | 2.5 | 2.5 |
| (D) Compatibilizer (parts by weight) | | 2 | 2 | 2 | 2 | 2 |
| Impact strength (J/m) | | 70 | 150 | 160 | 150 | 120 |
| Tensile Strength (MPa) | | 51 | 49 | 48 | 47 | 46 |
| Heat deflection temperature (°C) | | 102 | 102 | 106 | 106 | 102 |
| RPN, room temperature (@ 23°C) | | 3 | 3 | 3 | 3 | 3 |
| RPN, high temperature (@ 75°C) | | 6 | 5 | 5 | 5 | 7 |

Referring to Tables 1 to 3 above, it could be confirmed that in Examples 1 to 7 using a first graft copolymer comprising a rubber polymer having a glass transition temperature of -120°C or more and -90°C or less and a second graft copolymer comprising a rubber polymer having a glass transition temperature of -70°C or more and -40°C or less, friction noise was low even at high temperatures, and heat resistance and mechanical properties were excellent.

It could be confirmed that in Comparative Examples 1 to 4 and Comparative Examples 7 to 9 using only the first graft copolymer including a rubber polymer having a glass transition temperature of -120°C or more and -90°C or less, the high-temperature RPN grade was significantly lower than in Examples 1 to 7.

It could be confirmed that in Comparative Examples 5 and 6, which used a first graft copolymer including a rubber polymer having a glass transition temperature of -120°C or more and -90°C or less, and a graft copolymer including a rubber polymer having a glass transition temperature exceeding a range of -70°C or more and -40°C or less, the high-temperature RPN grade was significantly lower than in Examples 1 to 7.

It could be confirmed that in Comparative Example 10, which used different graft copolymers including a rubber polymer having a glass transition temperature of -120°C or more and -90°C or less, the high-temperature RPN grade was significantly lower than in Examples 1 to 7.

## Claims

1. A resin composition including:
a graft copolymer composition comprising a first graft copolymer including a rubber polymer having a glass transition temperature of -120°C or more and -90°C or less and a second graft copolymer including a rubber polymer having a glass transition temperature of -70°C or more and -40°C or less;
a matrix copolymer composition comprising any one selected from the group consisting of a first matrix copolymer including an alkyl-substituted aromatic vinyl-based monomer unit, a second matrix copolymer including a maleimide-based monomer unit, and a third matrix copolymer including an alkyl-unsubstituted aromatic vinyl-based monomer unit, or a mixture thereof;
an elastomer comprising a polyolefin-based compound; and
a third graft copolymer in which an aromatic vinyl-based monomer unit and a vinyl cyan-based monomer unit are grafted onto a polyalkylene main chain.

2. The resin composition according to claim 1, wherein the rubber polymer included in the first graft copolymer comprises a conjugated diene-based monomer unit, and
the rubber polymer included in the second graft copolymer comprises an acrylic monomer unit.

3. The resin composition according to claim 1, wherein the first matrix copolymer comprises an alkyl-substituted aromatic vinyl-based monomer unit and a vinyl cyan-based monomer unit.

4. The resin composition according to claim 1, wherein the second matrix copolymer comprises a maleimide-based monomer unit, an aromatic vinyl-based monomer unit, and a maleic anhydride monomer unit.

5. The resin composition according to claim 1, wherein the third matrix copolymer comprises an alkyl-unsubstituted aromatic vinyl-based monomer unit and a vinyl cyan-based monomer unit.

6. The resin composition according to claim 1, wherein the second graft copolymer is included in an amount of 4 parts by weight or more and 11 parts by weight or less based on 100 parts by weight of the total of the graft copolymer composition and the matrix copolymer composition.

7. The resin composition according to claim 1, wherein the first graft copolymer is included in an amount of 10 parts by weight or more and 30 parts by weight or less
based on 100 parts by weight of the total of the graft copolymer composition and the matrix copolymer composition.

8. The resin composition according to claim 1, wherein the elastomer is included in an amount of 1 parts by weight or more and 5 parts by weight or less
based on 100 parts by weight of the total of the graft copolymer composition and the matrix copolymer composition.

9. The resin composition according to claim 1, wherein the third graft copolymer is included in an amount of 1 parts by weight or more and 5 parts by weight or less
based on 100 parts by weight of the total of the graft copolymer and the matrix copolymer.

10. The resin composition according to claim 1, wherein the matrix copolymer composition comprises the second matrix copolymer and the third matrix copolymer,
wherein the second matrix copolymer is included in an amount of 5 parts by weight or more and 25 parts by weight or less based on 100 parts by weight of the total of the graft copolymer composition and the matrix copolymer composition, and
the third matrix copolymer is included in an amount of 50 parts by weight or more and 70 parts by weight or less based on 100 parts by weight of the total of the graft copolymer composition and the matrix copolymer composition.

11. The resin composition according to claim 1, wherein an RPN grade measured under the conditions of 75°C, relative humidity of 50%, speed of 1 mm/s, and normal force of 10 N according to VDA 230-206 is 3 or less.
